# EUROPEAN PATENT APPLICATION

(11) **EP 2 009 867 A1**
(43) Date of publication of application: **31.12.2008**
(21) Application number: 07290810.6
(22) Date of filing: 28.06.2007
(51) Int. Cl.: H04L 29/06

(54) **Access node with TCP traffic termination**

(71) Applicant: Alcatel Lucent, 75008 Paris (FR)
(72) Inventor: Cautereels, Paul Henri Marie, 2880 Hingene (BE); Gyselings, Tim, 2100 Deurne (BE); Dequeker, Hans Maurice Felix Corneel, 3020 Herent (BE)
(74) Representative: Narmon, Gisèle Marie Thérèse

(57) **Abstract**

A method to transmit a TCP Segment through an access node or any other router of a telecommunication system while allowing processing transport layer L4 information. The access node receives a first packet carrying a TCP segment header and a first portion of the TCP segment, and at least one second packet carrying another portion of this TCP segment. In other words, for reason of limited packet length, one TCP segment may be spread over multiple IP packets not all containing the TCP segment header. The problem of processing L4 information is solved because the access node terminates the TCP flows and the TCP segments are reassembled therein prior to be sent out.

## Description

The present invention relates to a method to transmit a packet segment through an access node of a telecommunication system according to the transport layer L4, said access node receiving a first packet carrying a segment header and a first portion of said segment, and receiving at least one second packet carrying another portion of said segment.

Such a method is generally known in the art. Today, most access networks and other kinds of routers combine Internet Protocol IP with a higher layer Transmission Control Protocol TCP running on top of it.

The Transmission Control Protocol TCP establishes a virtual connection between a destination and a source. However, the access networks have a problem if they want to process L4 information because, for reason of lower layer limited packet length (e.g. the maximum packet length of Ethernet packets), one TCP segment may be spread over multiple IP packets. Due to this, not every packet contains the TCP header, which makes it impossible to process such traffic at L4 on a packet per packet basis.

A common assumption today is that the segmentation is done by TCP and not IP. For TCP there is a mechanism to negotiate the Maximum Segment Size MSS between end-points. Intermediate boxes, like an access node, do thus normally not intervene in this negotiation. Each packet is thereby optimally filled. However, it is then impossible to add any byte, e.g. a PPP header, to the existing packet because the maximum length will be exceeded.

An object of the present invention is to provide a method of the above known type but wherein the transport layer L4 of TCP segments is optimized.

According to the invention, this object is achieved due to the fact that said first portion and other portions received at said access node are assembled for building said segment, that transmit packets are generated, each transmit packet carrying said segment header and a portion of said segment, and that said transmit packets are further transmitted by said access node.

In this way, instead of merely forwarding IP packets, as an access node (or router) would do today, the present access node would terminate the TCP traffic.

In order to do this, the access node would reassemble (rearrange) the portions of TCP segments coming-in, setup a respective new TCP connection and send-out the TCP segments in packets all carrying a segment header and at least a portion of the packet segment.

By terminating the TCP traffic and setting up the sessions at the opposite side of the access node a number of problems are solved:
- Filtering on L4 information (like port numbers), could not be done if IP fragmentation was applied because only the first IP packet contained the TCP header, the next IP packets didn't have this information. For example: snooping DHCP traffic could not be done if such a message is split over multiple IP packets. This is now possible since the original TCP segment was reconstructed;
- By reducing the round-trip times RTT of TCP/IP traffic, the throughput for such flows would increase By splitting the TCP/IP loop in two parts, each part would experience a RTT that is lower than the original one and as such the throughput would be higher;
- The access node would further also interact in the TCP flow control mechanism. This means that flow control will be triggered if the access node is running out of resources (memory). This could reduce the memory requirements for the access node;
- The TCP flow control mechanism could also be used to rate limit the traffic towards/from a subscriber. Today such traffic is typically policed in order to limit the traffic rate; so packets are being dropped if a certain bandwidth is exceeded. It has been noticed that policing (so dropping packets) can have bad effect on TCP/IP throughput. But with the present embodiment the rate of the TCP flow could be limited by making use of the TCP/IP flow control mechanism; and
- Finally, by terminating the TCP traffic, it becomes also more natural and evident to process this traffic at higher layers as would be required in a "service rich" access network.

Another characterizing embodiment of the present invention is that additional information is added to the generated transmit packets.

In an access node, header manipulation is a common operation. This is for instance mentioned in the Patent Application US 200610248582 A1 of Apr. 28, 2005 by Dileep Kumar Panjwani et al, and entitled *"One-Way Proxy System"* that discloses a one-way proxy system that supports one-way analysis of a transport control protocol TCP data stream. The one-way proxy system is used to intercept a TCP data link between two respective TCP endpoints. A one-way analyzer such as a one-way content filter, virus scanner, or firewall may be used to analyze a TCP data stream that is intercepted by the one-way proxy system. The one way proxy system preserves TCP options and TCP properties associated with the TCP packets in the TCP data stream, so that an existing TCP session between the TCP endpoints can survive in the event of a hardware bypass operation. The one-way proxy has a low overhead because significant TCP processing of the TCP data stream is only required in one direction.

However, one of the problems that may occur with such a packet, or more particularly header, manipulation is that the size of packet can increase, e.g. by inserting additional headers such as adding a PPP header.

This can cause the packet to become too large to be carried over Ethernet, which forces the access node to fragment packets at L3, and thus no longer at L4.

By allowing the access node to interact in the negotiation of the Maximum Segment Size MSS for TCP traffic, the server could be instructed to send shorter TCP segments so that the manipulated packet (including the additional headers) would still fit in a valid Ethernet frame.

In a preferred characterizing embodiment of the present invention, said first and second packets are received either from the user side or form the network side of said access node, and said transmit packets are respectively transmitted to the network side or the user side of said access node.

In other words, the access node is adapted to operate in the two directions.

Also another characterizing embodiment of the present invention is that the portions of said packet segment received from the user side of said access node are latched in an upstream buffer, whilst the portions of said packet segment received from the network side of said access node are latched in a downstream buffer.

Upstream and downstream packets are thus handles separately.

Further characterizing embodiments of the present method are mentioned in the appended claims.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

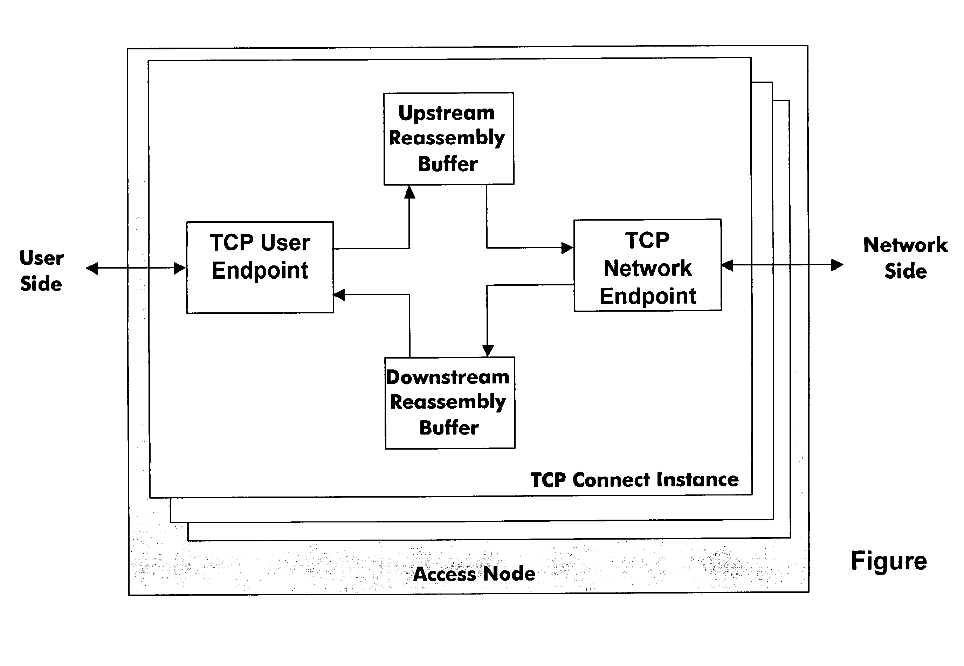

The above and other objects and features of the invention will become more apparent and the invention itself will be best understood by referring to the following description of an embodiment taken in conjunction with the accompanying drawings wherein the Figure represents an access node adapted to terminate TCP traffic according to the invention.

The Figure shows one of several possible TCP Connect Instances in an Access Node, or more generally any type of router, of a telecommunication system. The TCP connect instance is adapted to transmit packet segments from a User Side to a Network Side of the access network, and vice versa, according to the transport layer L4.

The Transport layer L4 is layer four of the seven-layer OSI reference model (ISO 7498). The Transport layer L4 responds to service requests from the Session Layer and issues service requests to the Network Layer. The purpose of the Transport Layer is to provide transparent transfer of data between hosts (thus relieving the upper layers from any concern with providing reliable and cost-effective data transfer).

In the present access node, or router, the IP packets are no longer merely forwarded, but the TCP traffic is terminated in order to allow the processing of the L4 information thereof.

Indeed, because of the limited packet length at L2 (e.g. Ethernet), one TCP packet segment may be spread over multiple IP packets and not every packet contains the TCP header, which makes it impossible to process such traffic at L4 on a packet per packet basis

It is to be noted that in case of TCP, there exists a mechanism to negotiate the Maximum Segment Size MSS, and thereby the packet length, between end-points. However, although a TCP segment may then theoretically be carried by a single IP packet according to this MSS negotiation, it is impossible to add anything to this packet, such as e.g. adding a PPP header while such a header manipulation is a common operation in access nodes.

The present method therefore consists in receiving upstream packets from the user side or end-user equipment in a TCP User Endpoint that terminates the incoming TCP flows. The packets are then transferred to an Upstream Reassembly Buffer. This buffer receives a first packet carrying a TCP packet segment header as well as a first portion of the TCP packet segment, and receives also at least one second packet carrying other portions of the TCP packet segment, but without packet segment header.

These incoming portions are reassembled in the dedicated upstream reassembly buffer in order to rebuild the whole TCP packet segment. After the segment has been reconstructed, the data is processed and afterwards transmit packets are generated.

Each transmit packet carries the TCP packet segment header and at least a portion of the rebuild TCP Segment, herein generally referred to as packet segment or simply "segment".

The transmit packets are then sent out via a TCP Network Endpoint towards the network side of the access node.

The same mechanism is performed in the opposite direction where portions of a TCP packet segment are received at the network side of the access node in the TCP network endpoint. They are then transferred to a Downstream Reassembly Buffer wherein they are reassembled prior to be sent out towards the user side of the access node via the TCP user endpoint.

It is to be noted that, in order to save memory, packets may be sent out before the entire segment has been reassembled.

By doing so the access node can interact in the setup of TCP flows and can also interact with the TCP flow-control mechanism.

Finally, since the L4 segments are reassembled, all packets can be handled at L4 independent of the fact whether packets are fragmented at IP layer or not.

Although above reference is made to the Transmission Control Protocol TCP, the present invention is also partly application to the User Datagram Protocol UDP. UDP is a minimal, datagram-oriented, transport network protocol above the IP network layer that does not guarantee data ordering or delivery. Because it is datagram-oriented, each send operation by the application results in the transmission of a single UDP Message, which can be spread over multiple IP packets. This contrasts with the Transmission Control Protocol TCP which is byte stream oriented and guarantees the delivery and ordering of the bytes sent. Because it is a byte stream oriented, a single send operation may result in a no IP datagrams (buffering), a single IP datagram, or multiple IP datagrams. In case of UDP, the reassembly is done only for internal processing purposes and not in order to be able to insert a L4 header in every packet.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. A method to transmit a packet segment through an access node of a telecommunication system according to the transport layer L4, said access node receiving a first packet carrying a segment header and a first portion of said segment, and receiving at least one second packet carrying another portion of said segment,
***characterized in that*** said first portion and other portions received at said access node are assembled for building said segment,
***in that*** transmit packets are generated, each transmit packet carrying said segment header and a portion of said segment,
***and in that*** said transmit packets are further transmitted by said access node.

2. The method according to claim **1**, ***characterized in that*** additional information is added to the generated transmit packets.

3. The method according to claim **1**, ***characterized in that*** said packet segment is a Transmission Control Protocol TCP packet segment.

4. The method according to claim **1**,
***characterized in that*** said first and second packets are received from the user side of said access node,
***and in that*** said transmit packets are transmitted to the network side of said access node.

5. The method according to claim **1**,
***characterized in that*** said first and second packets are received from the network side of said access node,
***and in that*** said transmit packets are transmitted to the user side of said access node.

6. The method according to claim **1**, ***characterized in that*** said first portion and other portions are latched in a buffer said access node prior to be assembled for building said packet segment.

7. The method according to the claims **4** to **6**,
***characterized in that*** the portions of said packet segment received from the user side of said access node are latched in an upstream buffer,
***and in that*** the portions of said packet segment received from the network side of said access node are latched in a downstream buffer.

8. The method according to claim **1**, ***characterized in that*** said access node is a router.
